# EUROPÄISCHE PATENTSCHRIFT

(11) **EP 3 229 724 B1**
(45) Veröffentlichungstag und Bekanntmachung des Hinweises auf die Patenterteilung: **19.09.2018**
(21) Anmeldenummer: 15805169.8
(22) Anmeldetag: 04.12.2015
(51) Int. Cl.: A61C 13/00, A61C 13/36

(54) **VERFAHREN ZUR HERSTELLUNG EINER DENTALPROTHESE MIT EINER SCHABLONE**
METHOD FOR PRODUCING A DENTAL PROSTHESIS USING A TEMPLATE
PROCÉDÉ POUR FABRIQUER UNE PROTHÈSE DENTAIRE AVEC UN GABARIT

(30) Priorität: 09.12.2014 DE 102014118231
(43) Veröffentlichungstag der Anmeldung: 18.10.2017
(73) Patentinhaber: Kulzer GmbH, 63450 Hanau (DE)
(72) Erfinder: FUNK, Matthias, 63456 Hanau (DE); SAGOLLA, Jochen, 60431 Frankfurt am Main (DE); REDEMANN, Helmut, 60325 Frankfurt am Main (DE)
(74) Vertreter: Schultheiss & Sterzel Patentanwälte PartG mbB
(86) Internationale Anmeldenummer: PCT/EP2015/078718
(87) Internationale Veröffentlichungsnummer: WO 2016/091762

(56) Entgegenhaltungen:
- EP-A1- 2 030 590
- EP-A1- 2 742 906
- DE-A1-102009 056 752
- DE-A1-102012 007 706
- JP-A- H09 238 960

## Beschreibung

Die Erfindung betrifft ein Verfahren zur Herstellung einer Dentalprothese, wobei die Dentalprothese eine Prothesenbasis und mehrere Prothesenzähne aufweist, wobei das Verfahren unter Anwendung eines virtuellen dreidimensionalen Dentalprothesen-Modells der zu erzeugenden physischen Dentalprothese erfolgt und wobei das virtuelle dreidimensionale Dentalprothesen-Modell virtuelle Prothesenzähne und eine virtuelle Prothesenbasis aufweist.
Die Erfindung betrifft auch eine Dentalprothese hergestellt mit einem solchen Verfahren, eine Vorrichtung oder Kombination von Vorrichtungen zum Durchführen eines solchen Verfahrens und eine Schablone hergestellt mit einem CAD/CAM-Verfahren zur Umsetzung eines solchen Verfahrens.
Der gängige Weg ist die analoge Erstellung von Dentalprothesen. Zur Herstellung der Prothesenbasis wird dazu derzeit meist ein analoges Verfahren verwendet, bei dem zunächst ein Abdruck des zahnlosen Kiefers des Patienten genommen wird. Aus diesem Abdruck wird ein Gipsmodell der Patientensituation gefertigt. Anschließend wird ein Funktionsmodell der Prothese aus Wachs auf dem Gipsmodell aufgebaut und mit Prothesenzähnen bestückt. Dann wird eine Hohlform oder Gießform aus diesen beiden Teilen aufgebaut, in der die Prothesenzähne bereits integriert sind. Dadurch sind die Prothesenzähne bereits in die Hohlform eingesetzt. Die Form wird mit einem zahnfleischfarbenen Kunststoff ausgegossen und während des Gießprozesses werden die Prothesenzähne mit der Prothesenbasis verbunden. Nach Aushärtung des Kunststoffs wird dieser nachbearbeitet, um die gewünschte Form zu erhalten. Bei dieser Technik wird ein Vorwall oder auch ein Vorguss aus Silikon oder Gips zur Fixierung und Positionierung der Prothesenzähne verwendet.
Zur Herstellung der Dentalprothese werden Prothesenzähne manuell und einzeln auf einer Wachsbasis auf einem Gipsmodell des unbezahnten Kiefers aufgestellt. Diese Wachsprothese wird im nächsten Schritt in einer Küvette mit Gips, Silikon oder Gel (je nach späterer Verarbeitungstechnik) eingebettet, um dann nach Aushärten des Einbettmaterials die Wachsbasis aus der Form heraus zu lösen, um einen Hohlraum für den Prothesenkunststoff zu schaffen. Die Prothesenzähne verbleiben dabei im Einbettmaterial. Ein entsprechender Kunststoff wird in den Hohlraum injiziert oder gegossen, dadurch erhält man nach Aushärtung des Kunststoffs die Dentalprothese. Bei der Aufstellung der konfektionierten Zähne werden diese der jeweiligen Mundsituation des Patienten vom Zahntechniker und gegebenenfalls auch vom Zahnarzt angepasst und beschliffen.

Neben handwerklichen Techniken gewinnen digitale Fertigungsmethoden im Dentalbereich immer mehr an Bedeutung. Zahnersatz, wie zum Beispiel Kronen und Brücken, wird seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion).

Ein CAD/CAM-Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Ferner gewinnen generative CAM-Verfahren wie SLM (Selective Laser Melting) zur Herstellung von Kronen, Brücken und Modellen sowie Stereolithographie und DLP (Digital light processing) für Dentalprodukte auf Polymerbasis wie zum Beispiel Provisorien, Prothesen, KFO-Apparaturen (Kiefer-Orthopädie-Apparaturen), Aufbissschienen, Bohrschablonen oder Dentalmodellen immer mehr an Bedeutung. Dabei ist die Herstellung von Zahnersatz auf Acrylatbasis mittels RP-Verfahren (Rapid-Prototyping-Verfahren) bisher immer noch starken Einschränkungen unterworfen. Mehrfarbiger Zahnersatz oder Zahnersatz aus verschiedenen PolymerMaterialien (zum Beispiel für Schmelz- und Dentinmassen) zur Herstellung von hochwertigem und ästhetischem Zahnersatz ist bisher nur mittels aufwendiger RP-Maschinen mit mehreren Materialkammern oder mittels Klebe- und Fügetechniken herstellbar.

Ebenso ist die Herstellung von Materialkombinationen (zum Beispiel CoCr und Polymer) mittels RP-Verfahren bisher sehr aufwendig und nicht in Serienreife umgesetzt. Die generative Herstellung von ästhetisch anspruchsvollen Konfektionszähnen für Teil- oder Totalprothesen ist derzeit nicht möglich, da mittels Stereolithographie nur ein Material beziehungsweise eine Farbe gedruckt werden kann. Das Drucken von mehrfarbigen Konfektionszähnen ist derzeit nicht möglich. Aus diesem Grund wird die Prothesenbasis mittels CAM-Verfahren (beispielsweise Fräsen oder Drucken) hergestellt und vorkonfektionierte Prothesenzähne werden mit der Prothesenbasis verklebt.

Es gibt bereits erste Verfahren, wie beispielsweise die aus der DE 10 2009 056 752 A1 oder der WO 2013 124 452 A1 bekannten Verfahren, bei denen eine dentale Teil- beziehungsweise Totalprothese digital aufgestellt und über CAD/CAM-Verfahren produziert wird. Die EP 2 742 906 A1 offenbart ein Verfahren, bei dem ein Zahnbogen mit einer Abformmasse verbunden wird, wobei die Abformmasse in einem individualisierten Abformlöffel enthalten ist und einen Abdruck der Mundraumsituation des Patienten enthält. Die Oberfläche der Form mit dem Zahnbogen wird digitalisiert und anschließend rechnerisch ein virtuelles Modell des Zahnbogens möglichst passend in dem virtuellen Modell der Prothesenbasis positioniert und orientiert. Bei der abschließenden Fertigung müssen die Prothesenzähne einzeln und manuell auf die korrekte Passung in den dafür vorgesehenen Zahnfächern der Prothesenbasis kontrolliert werden, um sie anschließend einzukleben, wobei als Kontrollinstrument eine Transferschablone verwendet werden kann. Aus der DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt.

Bei der Herstellung von herausnehmbarem Zahnersatz, wie Voll- und Teilprothesen, die mit Hilfe digitaler Daten mit einer CAD-Konstruktion gefertigt wurden, gibt es technische Lösungsansätze, die Daten der Prothesenbasis und die Zähne zu separieren. Die Prothesenbasis kann dabei durch ein additives oder auch subtraktives Fertigungsverfahren hergestellt werden. Als Prothesenzähne kommen konfektionierte Kunststoffzähne oder auch individuell hergestellte Prothesenzähne oder Zahnbögen aus gleichen Fertigungsverfahren wie die Prothesenbasis in Frage. In jedem Fall müssen an der Prothesenbasis Zahnfächer zur Aufnahme dieser Prothesenzähne vorgesehen sein, in die dann in einem nachgeschalteten manuellen Fertigungsschritt, die Prothesenzähne oder Zahnbögen, zum Beispiel durch Kleben, befestigt werden.

Die Schwierigkeit dabei ist, die auf digitalem Weg erzeugte Konstruktion und Ausrichtung der Zähne zur Prothesenbasis in den manuellen Schritt zu überführen. Da die Zahnfächer der Prothesenbasis meist nicht sehr tief angelegt werden können, haben die eingesetzten Zähne nicht genug Führung, so dass eine Rotations- und auch Kippbewegung in oraler beziehungsweise lingualer Richtung jedes einzelnen Prothesenzahnes aber auch der Prothesenzähne zueinander, die Dentalzwischenräume betreffend, möglich ist. Eine freihändige Positionierung der Prothesenzähne hat daher nichts mehr mit der konstruierten Aufstellung und Abstimmung der Prothesenzähne in Ober- und Unterkiefer im digitalen Datensatz zu tun.

Solche Verfahren haben den Nachteil, dass die Prothesenzähne okklusal bearbeitet oder entnommen werden müssen, wobei anschließend die Prothesenbasis beschliffen wird, oder die Prothesenzähne basal beschliffen werden, um deren Position und Lage anzupassen. In den meisten Fällen müssen die vorkonfektionierten Prothesenzähne, die die besten ästhetischen Ergebnisse liefern, vor dem Verkleben basal eingekürzt werden, um die Bisshöhe (die Okklusion) der Dentalprothese einzustellen, so dass sich die Notwendigkeit ergibt, hierzu ein rationelles und kostengünstiges Verfahren anzugeben.

Aus der EP 2 571 451 B1 und der EP 2 666 438 A2 sind Verfahren bekannt, bei denen Prothesenzähne in einer Halterung in Wachs eingebettet werden und anschließend basal abgefräst werden. Die abgefrästen Prothesenzähne werden von dem Wachs befreit und anschließend in eine Prothesenbasis eingesetzt und dort eingeklebt, um eine Dentalprothese herzustellen.

Diese Verfahren haben den Nachteil, dass die Prothesenzähne einzeln oder in Gruppen bearbeitet und einzeln in die Prothesenbasis eingesetzt und eingeklebt werden müssen. Der richtige Ort zum Einsetzen der Prothesenzähne in die Prothesenbasis muss dabei durch Ausprobieren gefunden werden. Die passende basale Form der Prothesenzähne muss für jeden Prothesenzahn berechnet werden. Zudem müssen die Lagen und Orientierungen der einzelnen Prothesenzähne in dem Wachsblock bestimmt werden, damit diese mit einem vollautomatischen, computergesteuerten Fräsverfahren basal abgetragen werden können. Bei solchen Verfahren kann es zu Fehlsetzungen von Prothesenzähnen in der Prothesenbasis kommen oder diese Fehlsetzungen müssen mit zusätzlichen Maßnahmen verhindert werden.

Die Aufgabe der Erfindung besteht also darin, die Nachteile des Stands der Technik zu überwinden. Insbesondere soll ein Verfahren bereitgestellt werden, mit dem eine einfache und schnell durchzuführende Herstellung der Dentalprothese durchführbar ist. Dabei sollen moderne computergesteuerte Verfahren einsetzbar sein und vorhandene Daten und Techniken möglichst weitreichend nutzbar sein. Zudem sollen die Prothesenzähne möglichst ohne eine Fehlsetzung in der zuvor berechneten Orientierung und Lage an der Prothesenbasis befestigt werden können.
Bei einem manuellen Einkürzen der vorkonfektionierten Prothesenzähne ergibt sich außerdem das Problem, dass die basale Seite (der Cervikal-Bereich) der zu erzeugenden Prothesenzähne eine individuelle Geometrie aufweist und vor dem Fräsen oder Drucken der Prothesenbasis diese Geometrie entsprechend eingescannt und das passende Gegenstück für die Prothesenbasis konstruiert werden müsste. Hierdurch entsteht ein Mehraufwand.
Die Aufgaben der Erfindung werden gelöst durch ein Verfahren zur Herstellung einer Dentalprothese gemäss Anspruch 1, wobei die Dentalprothese eine Prothesenbasis und mehrere Prothesenzähne aufweist, wobei das Verfahren unter Anwendung eines virtuellen dreidimensionalen Dentalprothesen-Modells der zu erzeugenden physischen Dentalprothese erfolgt und wobei das virtuelle dreidimensionale Dentalprothesen-Modell virtuelle Prothesenzähne und eine virtuelle Prothesenbasis aufweist, gekennzeichnet durch die folgenden chronologischen Schritte:
A) aus der äußeren Form der vestibulären Oberflächen und/oder okklusalen Oberflächen der virtuellen Prothesenzähne und aus der äußeren Form der vestibulären Oberfläche der virtuellen Prothesenbasis des virtuellen dreidimensionalen Dentalprothesen-Modells wird ein virtuelles Modell einer Schablone berechnet, so dass ein Bereich der virtuellen Oberfläche der virtuellen Schablone durch ein Negativ der vestibulären Oberflächen und/oder okklusalen Oberflächen der virtuellen Prothesenzähne und der virtuellen Prothesenbasis gebildet wird, wobei die Lage und die Orientierung der virtuellen Prothesenzähne relativ zueinander und relativ zu der virtuellen Prothesenbasis in dem Negativ erhalten bleibt;
B) Herstellen einer physischen Schablone mit einem CAM-Verfahren anhand der Daten des virtuellen Modells der Schablone;
C) Anlegen und Befestigen von physischen Prothesenzähnen an der Schablone, wobei die vestibulären Oberflächen und/oder okklusalen Oberflächen der Prothesenzähne an die durch das dazu passende Negativ geformte Oberfläche der Schablone angelegt werden; und
D) Befestigen der physischen Prothesenzähne an einer physischen Prothesenbasis, wobei die Prothesenbasis in die mit den Prothesenzähnen bestückte Schablone eingesetzt wird, so dass die vestibuläre Oberfläche der Prothesenbasis an die durch das Negativ geformte passende Oberfläche der Schablone angelegt wird.

Die Bezeichnung "okklusal" bedeutet an der Okklusionsfläche beziehungsweise Kaufläche und zur Okklusionsfläche hin als Lage- und Richtungsbezeichnung an den Zähnen. Die Bezeichnung "vestibulär" bedeutet zum Mundvorhof hin (labial oder bukkal). Diese Begriffe werden auch für Prothesenzähne angewendet.

Bei erfindungsgemäßen Verfahren kann vorgesehen sein, dass das virtuelle dreidimensionale Dentalprothesen-Modell rechnerisch mittels File-Splitting in ein dreidimensionales Modell der virtuellen Prothesenzähne und ein virtuelles dreidimensionales Modell der Prothesenbasis geteilt wird.

Dabei kann bevorzugt vorgesehen sein, dass bei der Teilung des virtuellen Dentalprothesen-Modells Zahnfächer in das virtuelle Modell der Prothesenbasis gerechnet werden, die zu den basalen Seiten des virtuellen Modells der Prothesenzähne passen, so dass die Form des virtuellen Modells der Prothesenbasis flächenbündig mit der Form der basalen Seiten des virtuellen Modells der Prothesenzähne verbunden beziehungsweise aneinander gelegt werden kann.

Durch diese Maßnahmen wird erreicht, dass die Form der mit Hilfe der virtuellen Modelle erzeugten Prothesenbasis und Prothesenzähne genau zueinander passen und passend und flächenbündig und dadurch stabil ineinander befestigt werden können, beziehungsweise die nach Maßgabe des virtuellen Modells der Prothesenzähne hergestellten oder bearbeiteten physischen Prothesenzähne flächenbündig mit den Zahnfächern der physischen Prothesenbasis verbunden werden können.

Des Weiteren kann vorgesehen sein, dass das virtuelle Modell der Schablone zusätzlich aus der äußeren Form der vestibulären Oberfläche eines Modells der Mundraumsituation des Patienten berechnet wird, so dass ein Bereich der virtuellen Oberfläche der virtuellen Schablone durch ein Negativ zumindest eines Bereichs der vestibulären Oberfläche des Modells der Mundraumsituation gebildet wird, wobei die Lage und die Orientierung der virtuellen Prothesenzähne und der virtuellen Prothesenbasis relativ zu dem Modell der Mundraumsituation, bei auf dem Modell der Mundraumsituation aufliegender virtueller Prothesenbasis, in dem Negativ erhalten bleibt.

Das Modell der Mundraumsituation kann entweder mit Hilfe eines Intraoralscans erzeugt worden sein, mit Hilfe eines Wachs- oder Silikonabdrucks, der dann anschließend eingescannt wurde oder mit Hilfe eines Gipsmodells der Mundraumsituation, die anschließend eingescannt wurde. Das Modell der Mundraumsituation ist für CAD/CAM-gefertigte Dentalprothesen bereits deswegen notwendig, um die Auflage der Prothesenbasis im zahnlosen oder bereichsweise zahnlosen Kiefersattel des Patienten zu bestimmen. Aus dem virtuellen Modell der Mundraumsituation wird dann ein physisches Modell der Mundraumsituation mit einem CAM-Verfahren gefertigt, auf das die Prothesenbasis aufgesetzt werden kann.

Das Modell der Mundraumsituation des Patienten kann dabei eine Basis aufweisen, die nicht der Mundraumsituation des Patienten entspricht und auf der die Form der Mundraumsituation aufgebaut ist. Die Basis des Modells der Mundraumsituation kann als eine Fortsetzung der von der Form des Zahnbogens abgewandten Seite der Mundraumsituation aufgebaut werden. Diese Verlängerung beziehungsweise Basis des Zahnbogens, der keine reale Entsprechung der Mundraumsituation gegenübersteht, ist dann bevorzugt zur Anpassung der Schablone vorgesehen. Dadurch kann eine größere vestibuläre Verbindungsfläche von dem Modell der Mundraumsituation zur Schablone ermöglicht werden, so dass eine leichter durchzuführende und exaktere Positionierung der Prothesenzähne in der Prothesenbasis möglich ist.

Mit einer Weiterbildung der Erfindung wird vorgeschlagen, dass in Schritt D) das Befestigen der physischen Prothesenzähne an der physischen Prothesenbasis derart erfolgt, dass die Prothesenbasis und das physische Modell der Mundraumsituation des Patienten in die mit den Prothesenzähnen bestückte Schablone eingesetzt werden, so dass die vestibuläre Oberfläche der Prothesenbasis und die vestibuläre Oberfläche des physischen Modells des Mundraums des Patienten an die durch das Negativ geformte Oberfläche der Schablone angelegt wird.

Bevorzugt entspricht das physische Modell des Mundraums des Patienten dem virtuellen Modell des Mundraums zumindest bezüglich der Verbindungsflächen zur Prothesenbasis und bezüglich der Verbindungsflächen zur Schablone. Hierdurch kann eine große Verbindungsfläche zwischen dem physischen Modell der Mundraumsituation und der Prothesenbasis und den Prothesenzähnen zur Positionierung der Prothesenzähne in der Prothesenbasis genutzt werden. Vorliegend wird die Richtungsangabe vestibulär bezüglich des Modells des Mundraums auch für eine Basis des Modells des Mundraums verwendet, die keine Entsprechung in der Mundraumsituation des Patienten hat, sondern nur wie die bei der Patientensituation reale Mundraumsituation gleich ausgerichteten Oberflächen. Bevorzugt verbleibt zwischen den Verbindungsflächen der Prothesenbasis und den Prothesenzähnen zur Schablone und/oder zwischen der Prothesenbasis und dem Modell der Mundraumsituation zur Schablone kein Zwischenraum. Dies kann dadurch erreicht werden, dass die Grenzlinien zwischen der Prothesenbasis und den Prothesenzähnen und/oder zwischen der Prothesenbasis und dem Modell der Mundraumsituation als Negativ auf der Oberfläche der Schablone erhalten bleibt.

Gemäß einer Weiterbildung der vorliegenden Erfindung kann auch vorgesehen sein, dass zu dem Negativ der vestibulären Oberfläche des Modells der Mundraumsituation rechnerisch zumindest eine Indexierung, bevorzugt zumindest drei Indexierungen, zu dem virtuellen Modell der Schablone ergänzt wird und an der vestibulären Oberfläche des Modells der Mundraumsituation rechnerisch ein passendes Negativ der Oberfläche der zumindest einen Indexierung zu dem Modell der Mundraumsituation ergänzt wird, bevorzugt passende Negative der zumindest drei Indexierungen zu dem Modell der Mundraumsituation ergänzt werden.

Hierdurch kann eine fehlerhafte Orientierung der Schablone und damit der Prothesenzähne auf der Prothesenbasis vermieden werden. Alternativ kann die Form des Modells der Mundraumsituation aber auch ohne lokale Indexierungen in seiner Gesamtheit derart geformt sein, dass eine eindeutige Positionierung der Schablone an dem Modell der Mundraumsituation möglich ist.

Bevorzugte Ausgestaltungen des erfindungsgemäßen Verfahrens können sich dadurch auszeichnen, dass an dem Negativ der vestibulären Oberfläche der virtuellen Prothesenbasis rechnerisch zumindest eine Indexierung, bevorzugt zumindest drei Indexierungen, zu dem virtuellen Modell der Schablone ergänzt wird und an der vestibulären Oberfläche der virtuellen Prothesenbasis rechnerisch ein dazu passendes Negativ der Oberfläche der zumindest einen Indexierung ergänzt wird, bevorzugt passende Negative der zumindest drei Indexierungen ergänzt werden.

Als Indexierungen können Ausnehmungen oder Erhebungen als geometrische Körper auf der Oberfläche der Prothesenbasis, des physischen Modells der Mundraumsituation und als Negativ dazu an der Schablone vorgesehen sein, beziehungsweise erzeugt werden. Mit Hilfe der Indexierungen ist eine eindeutige Positionierung der Schablone an der physischen Prothesenbasis und/oder an dem physischen Modell der Mundraumsituation möglich. Aufgrund der Indexierung kann eine Rastung an der physischen Prothesenbasis und/oder dem physischen Modell der Mundraumsituation vorgegeben werden, die in eine Gegenrastung (nämlich die negative Indexierung) an der Schablone greift, so dass die korrekte Positionierung der Schablone leicht durchführbar ist. Alternativ kann auch die Form der Prothesenbasis ohne lokale Indexierungen in ihrer Gesamtheit derart geformt sein, dass eine eindeutige Positionierung der Schablone an der Prothesenbasis möglich ist.

Ferner kann vorgesehen sein, dass nach Schritt D) die Schablone von der fertigen Dentalprothese bestehend aus den in der Prothesenbasis befestigten Prothesenzähnen entfernt wird.

Hierdurch wird das Verfahren abgeschlossen und die erzeugte Dentalprothese liegt dann einzeln vor. Durch diesen Schritt soll klargestellt werden, dass die Schablone nicht endgültig mit den Prothesenzähnen und der Prothesenbasis verbunden wird. Im Gegensatz dazu sollen die Prothesenzähne abschließend endgültig mit der Prothesenbasis verbunden werden beziehungsweise sein, um die Dentalprothese zu erzeugen. Zusätzlich beziehungsweise alternativ kann auch vorgesehen sein, dass mit der Schablone eine vorläufige Zahnaufstellung und Fixierung in der Prothesenbasis erfolgt, um eine Anprobe mit Korrekturmöglichkeit beim Zahnarzt zu ermöglichen. Erst in einem anschließenden Schritt wird dann der endgültige Verbund durchzuführt.

Des Weiteren kann vorgesehen sein, dass das virtuelle dreidimensionale Dentalprothesen-Modell auf der Grundlage eines Intraoral-Scans zur Formgebung der virtuellen Prothesenbasis und durch eine virtuelle Aufstellung von virtuellen Modellen vorkonfektionierter Prothesenzähne in der virtuellen Prothesenbasis erzeugt wird, wobei bevorzugt die Form, die Lage und/oder die Orientierung der Prothesenzähne durch eine Simulation der Lage der Dentalprothese im Mundraum des Patienten ausgewählt wird und/oder durch eine Simulation der Lage und Orientierung der Prothesenzähne zueinander und/oder zur Prothesenbasis ausgewählt wird, wobei besonders bevorzugt die Okklusionsebene und/oder die Kaubewegungen des Mundraums simuliert werden.

Hierdurch wird eine weitere Automatisierung des Verfahrens erreicht. Da für das virtuelle Modell der Schablone ohnehin ein virtuelles Dentalprothesen-Modell benötigt wird, ist eine derartige Erzeugung der Daten für die virtuellen Modelle besonders vorteilhaft. Durch die angegebenen Maßnahmen wird eine hohe Variabilität des Verfahrens bereitgestellt und dadurch eine besonders individuelle und damit gut passende Anpassung der erzeugten Dentalprothese ermöglicht.

Gemäß einer Weiterbildung kann vorgesehen sein, dass die physische Prothesenbasis und die physische Schablone mit CAM-Verfahren, insbesondere mit Rapid-Prototyping-Verfahren, basierend auf den virtuellen Modellen hergestellt und/oder bearbeitet werden.

Hierdurch können die für das Verfahren notwendigen virtuellen Modelle auch gleichzeitig zur schnellen und automatisierten Herstellung der Prothesenbasis verwendet werden.

Es kann auch vorgesehen sein, dass die in die Schablone eingesetzten physischen Prothesenzähne basal bearbeitet werden, bevor sie an der physischen Prothesenbasis befestigt werden, bevorzugt die eingesetzten vorkonfektionierten Prothesenzähne basierend auf dem virtuellen Modell der Prothesenzähne mit einem CAM-Verfahren basal abgetragen werden, besonders bevorzugt einer computergesteuerten Fräse basal abgetragen werden, bevor sie an der physischen Prothesenbasis befestigt werden.

Dabei wird besonders bevorzugt eine computergesteuerte CAM-Fräse, wie beispielsweise eine computergesteuerte 4-Achs- oder 5-Achs-Fräse, verwendet. Hierdurch kann eine Anpassung der Prothesenzähne an die Prothesenbasis erfolgen, so dass die hergestellte Dentalprothese besonders stabil und variabel aufgebaut werden kann.

Bei derartigen Verfahren kann auch vorgesehen sein, dass die Prothesenzähne anhand des virtuellen Modells der Prothesenzähne mit einem CAM-Verfahren basal abgetragen werden, insbesondere abgefräst werden, so dass die basale Form der Prothesenzähne derart an Zahnfächer für die Prothesenzähne in der Prothesenbasis angepasst wird, dass die äußere Form der Prothesenbasis mit den eingesetzten Prothesenzähnen der äußeren Form des virtuellen Dentalprothesen-Modells entspricht.
Bevorzugt werden die Prothesenzähne durch das basale Abtragen an die Form von Zahnfächern für die Prothesenzähne in der Prothesenbasis angepasst. Die Prothesenzähne können anschließend mit ihrer basalen Seite, die der koronalen Seite der Prothesenzähne gegenüberliegt und die aufgrund des basalen Abtragens der Prothesenzähne an die Form von Zahnfächern der Prothesenbasis angepasst ist, problemlos in diese Zahnfächer eingesetzt beziehungsweise an diese Zahnfächer angelegt werden.
Es kann auch vorgesehen sein, dass die Prothesenzähne mit einem CAM-Verfahren hergestellt werden, bevorzugt durch Fräsen oder ein aufbauendes CAM-Verfahren hergestellt werden.
Hierdurch kann eine weitere Automatisierung des Verfahrens erreicht werden, bei der vorhandene Daten möglichst weitreichend nutzbringend eingesetzt werden. Ferner kann vorgesehen sein, dass zur Berechnung des virtuellen Dentalprothesen-Modells bereits vorhandene Daten zur äußeren Form von bekannten vorkonfektionierten Prothesenzähnen verwendet werden.
Mit dieser Maßnahme kann ein wiederholtes Einscannen beziehungsweise Ausmessen der verwendeten physischen Prothesenzähne vermieden werden und so eine weitere Vereinfachung des Verfahrens erreicht werden.
Die Aufgaben der vorliegenden Erfindung werden auch gelöst durch eine Dentalprothese gemäß Anspruch 14. Ferner werden die der Erfindung zugrundeliegenden Aufgaben gelöst durch eine Vorrichtung oder Kombination von Vorrichtungen zum Durchführen eines solchen Verfahrens, umfassend eine CAM-Vorrichtung und einen Computer zur Berechnung der virtuellen Modelle und zur Steuerung der CAM-Vorrichtung, gemäß Anspruch 15. Schließlich werden die Aufgaben der Erfindung auch gelöst durch eine Schablone gemäß Anspruch 16. Die physischen Prothesenzähne, die physische Schablone, gegebenenfalls das physische Modell der Mundraumsituation des Patienten und/oder die physische Prothesenbasis bestehen bevorzugt aus einem Kunststoff, besonders bevorzugt aus Polymethylmethacrylat (PMMA), beziehungsweise werden daraus oder damit gefertigt.

Die Prothesenzähne können einzeln und/oder in mehreren Gruppen zusammenhängend oder als komplette Zahnreihen zusammenhängend vorliegen. Zusammenhängende Prothesenzähne sind fest miteinander verbunden.

Vorliegend wird im Rahmen der Erfindung der allgemein bekannte Begriff Rapid-Prototyping-Verfahren (RP-Verfahren) für ein Herstellungsverfahren verwendet, bei dem die Prothesenbasis und die Schablone mit einem für Rapid-Prototyping üblichen Herstellungsverfahren hergestellt wird. Da es sich bei der Prothesenbasis und der Schablone nicht um einen Prototypen, sondern um fertige oder halbfertige Bauteile handelt, könnten anstatt des Begriffs "Rapid-Prototyping-Verfahren" auch die in solchen Zusammenhängen gelegentlich gebrauchten Begriffe "Rapid Manufacturing", "generatives Fertigungsverfahren", "Rapid-Product-Development", "Advanced Digital Manufacturing" oder "E-Manufacturing" verwendet werden. Die Prothesenbasis wird bevorzugt aus einem rosa-farbenen oder pinken Kunststoff gefertigt und gegebenenfalls die Prothesenzähne aus mehreren zahnfarbenen Kunststoffen.

Der Zement oder der Kleber zur endgültigen Fixierung der Prothesenzähne in der Prothesenbasis sollte nicht toxisch, Volumen füllend, farbstabil, dauerhaft im Verbund, hydrolysebeständig und volumenstabil beim Aushärten sein, sowie eine passende Farbe haben, die über lange Zeit stabil ist. Hierfür kommen neben PMMA-Zementen wie Paladur® der Heraeus Kulzer GmbH auch Versyo® der Heraeus Kulzer GmbH, Signum composit Flow® der Heraeus Kulzer GmbH oder andere PMMA-basierte Zemente in Frage.

Als Kleber lässt sich beispielsweise ein Sekundenkleber verwenden oder ein Klebstoff, der auch zum Füllen eines Volumens von möglicherweise entstehenden Zwischenräumen zwischen der Prothesenbasis und den Prothesenzähnen geeignet ist.

Der Erfindung liegt die überraschende Erkenntnis zugrunde, dass es mit der Schablone gelingt, eine Passform nach Art eines dreidimensionalen Puzzle-Teils bereitzustellen, mit der die Positionierung der Prothesenzähne in der Prothesenbasis eindeutig zu erreichen ist. Dazu wird die Schablone als passende Form zur äußeren Form der zu erzeugenden Prothesenbasis und der einzusetzenden Prothesenzähne hergestellt, so dass die Prothesenzähne nur in der gewünschten Ausrichtung und Lage zueinander und zur Prothesenbasis an der Prothesenbasis zu befestigen sind. Dadurch können Fehler und Aufwand bei der Positionierung der Prothesenzähne in der Prothesenbasis vermieden werden. Die Schablone kann dabei mit einem CAD/CAM-Verfahren aus den virtuellen Modellen der Prothesenzähne und der Prothesenbasis digital konstruiert und anschließend mit einem CAM-Verfahren hergestellt werden. Die hierfür notwendigen virtuellen Modelle der Prothesenzähne und der Prothesenbasis sind bei einer Herstellung der Dentalprothese mit CAD/CAM-Verfahren ohnehin vorhanden und können daher ohne großen Mehraufwand genutzt werden.

Die Form eines analogen Übertragungsschlüssels kann mit dem erfindungsgemäßen Verfahren nun auch auf digitalem Wege genutzt werden und als separater Datensatz zusätzlich zu der Prothesenbasis, den Prothesenzähnen und dem Modell generiert werden.

Im Folgenden werden Ausführungsbeispiele der Erfindung anhand von fünf schematisch dargestellten Figuren erläutert, ohne jedoch dabei die Erfindung zu beschränken. Dabei zeigt:
Figur 1: einen Querschnitt einer Dentalprothese mit angelegter Schablone;
Figur 2: einen Querschnitt einer Dentalprothese mit angelegter Schablone und mit einem Modell des Mundraums eines Patienten;
Figur 3: einen Querschnitt einer Dentalprothese mit angelegter Schablone;
Figur 4: einen Querschnitt einer Dentalprothese mit angelegter Schablone und mit einem Modell des Mundraums eines Patienten; und
Figur 5: ein beispielhaftes Ablaufdiagramm für ein erfindungsgemäßes Verfahren.

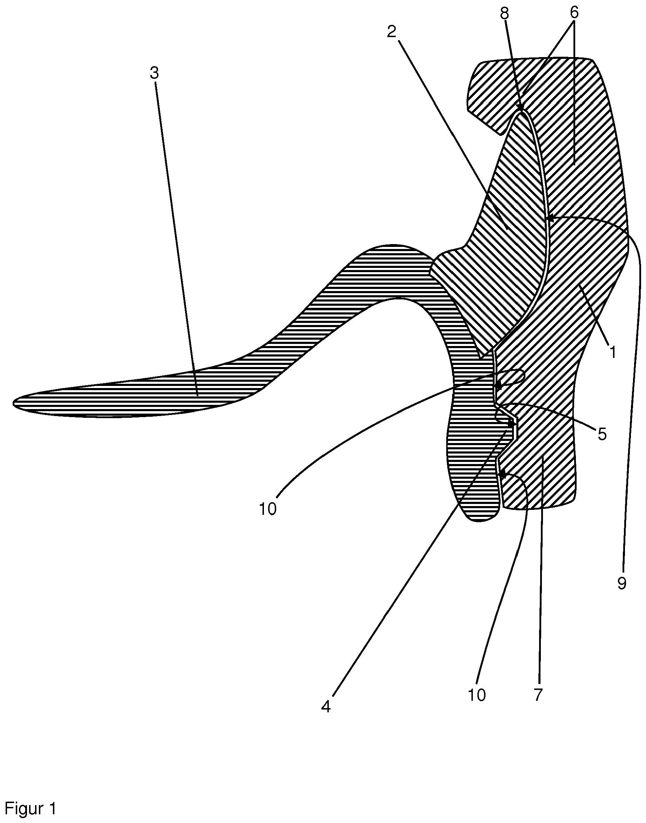

Figur 1 zeigt einen Querschnitt einer Dentalprothese mit angelegter Schablone 1. Die Querschnittebene liegt in der Transversalebene des Patienten oder ist parallel zur Transversalebene des Patienten. Die Dentalprothese umfasst mehrere Prothesenzähne 2 und eine Prothesenbasis 3. Die Prothesenzähne 2 sind hier Schneidezahnprothesen beziehungsweise als Incisiven ausgebildet. Die Prothesenzähne 2 werden in passenden Zahnfächern der Prothesenbasis 3 befestigt, in dem die Prothesenzähne 2 in die Schablone 1 eingesetzt werden, die Prothesenzähne 2 basal und die Zahnfächer mit einem Klebstoff benetzt werden und anschließend die Prothesenbasis 3 in die Schablone 1 eingesetzt wird.

Um die gewünschte Orientierung und Lage der Prothesenzähne 2 in der Prothesenbasis 3 durch einen eindeutigen Sitz der Schablone 1 auf der Prothesenbasis 3 sicherzustellen sind an der Schablone 1 und an der Prothesenbasis 3 drei Indexierungen 4, 5 vorgesehen. An der Prothesenbasis 3 ist eine Erhebung 4 als Indexierung 4 beziehungsweise als geometrische Form aufgesetzt, die in eine Vertiefung 5 als Indexierung 5 an der Schablone 1 greift. Hierdurch wird erreicht, dass die Schablone 1 mit den eingesetzten Prothesenzähnen 2 nur in einer bestimmten Orientierung und Lage auf die Prothesenbasis 3 aufgesetzt werden kann und so die Prothesenzähne 2 nur in der in dem Dentalprothesen-Modell berechneten Orientierung und Lage in der Prothesenbasis 3 befestigt werden können.

Die physische Prothesenbasis 3 besteht aus einem rosa-farben eingefärbten Kunststoff. Die Färbung und Transparenz wird passend zu einer Zahnfleischoptik gewählt. In der Prothesenbasis 3 ist entlang des Kieferbogens eine Vielzahl von Zahnfächern zur Fixierung der Prothesenzähne 2 vorgesehen. Die Prothesenbasis 3 wird anhand eines virtuellen CAD-Modells erzeugt, das mittels File-Splitting aus einem virtuellen Dentalprothesen-Modell gewonnen wurde. Zur Herstellung der realen Prothesenbasis 3 wird das virtuelle CAD-Modell der Prothesenbasis 3 mit einem CAM-Verfahren hergestellt, beispielsweise ausgedruckt oder aus einer Ronde herausgefräst.

Das virtuelle Dentalprothesen-Modell wird erzeugt, indem zunächst ein Intraoral-Scan beim Patienten durchgeführt oder ein Scan eines Gipsmodells der Mundraumsituation oder ein Scan des Abdrucks der Mundraumsituation des Patienten aufgenommen wird. Basierend auf diesen Daten erfolgt eine virtuelle Aufstellung der Prothesenzähne 2, wobei dabei bevorzugt auch die Artikulation des Kiefers des Patienten berücksichtigt wird. Dazu können virtuelle CAD-Modelle von zu verwendenden vorkonfektionierten Prothesenzähnen 2 verwendet werden, die in einer virtuellen Prothesenbasisgrundform aufgestellt werden.

Die Schablone 1 verfügt über einen Dentalteil 6, der an den Prothesenzähnen 2 anliegt, und über einen Basisteil 7, der an der Prothesenbasis 3 anliegt. Der Dentalteil 6 bildet ein Negativ der okklusalen beziehungsweise incisalen Oberflächen 8 und der vestibulären Oberfläche 9 der anhand des Dentalprothesen-Modells zueinander ausgerichteten Prothesenzähne 2 und der Basisteil 7 bildet ein Negativ der vestibulären Oberfläche 10 der anhand des Dentalprothesen-Modells zu den Prothesenzähnen 2 ausgerichteten Prothesenbasis 3. Die Schablone 1 wird mit Hilfe eines CAD/CAM-Verfahrens erzeugt, indem die äußere Form 8, 9, 10 der virtuellen Modelle der zueinander und zur Prothesenbasis 3 ausgerichteten Prothesenzähne 2 sowie der Prothesenbasis 3 genutzt wird, um die die Form einer Oberfläche der Schablone 1 als Negativ der vestibulären Oberfläche 10 der Prothesenbasis 3 und der vestibulären Oberfläche 9 und okklusalen Oberfläche 8 der Prothesenzähne 2 zu berechnen und anschließend herzustellen. Hierdurch wird eine genaue Passform der Prothesenzähne 2 und der Prothesenbasis 3 mit der Schablone 1 erreicht.

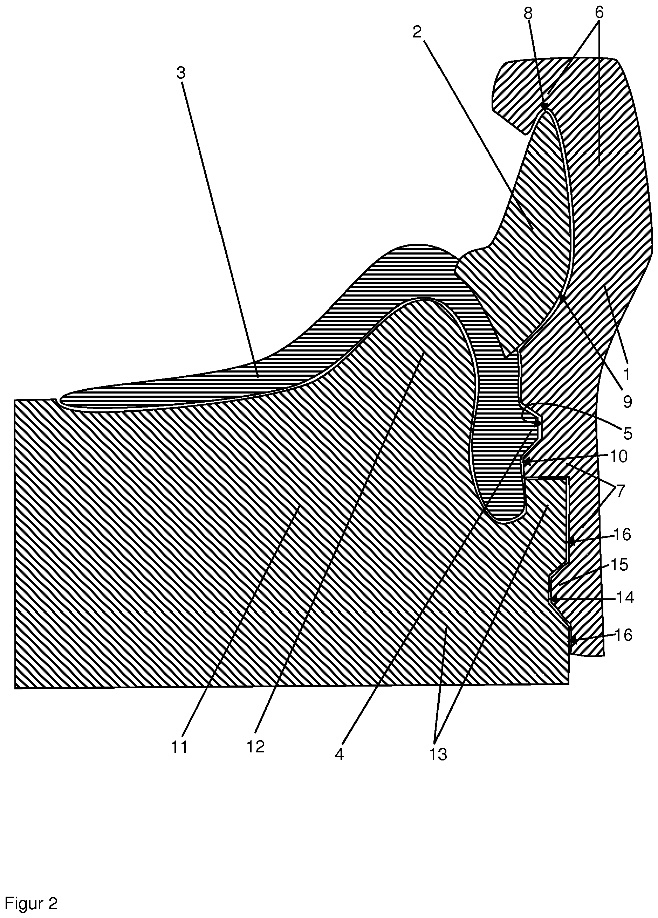

Figur 2 zeigt einen Querschnitt einer Dentalprothese mit angelegter Schablone 1 und mit einem angelegten Modell 11 des Mundraums eines Patienten. Der Aufbau nach Figur 2 gleicht dem nach Figur 1, wobei zusätzlich das Modell 11 der Mundraumsituation des Patienten verwendet wird, um den Aufbau zusammenzufügen. Auf dem Modell 11 der Mundraumsituation liegt die Prothesenbasis 3 auf. Auf dem Kieferbogen der Prothesenbasis 3 sind Zahnfächer angeordnet, in die die Prothesenzähne 2 eingesetzt sind.

Die Schablone 1 steht im Vergleich zu dem Aufbau nach Figur 1 weiter über und überdeckt teilweise die vestibuläre Oberfläche 16 des Modells 11 der Mundraumsituation. Dass Modell 11 der Mundraumsituation besteht aus einem oberen Teil 12, der ein Modell des zahnlosen Kieferbogens 12 des Patienten darstellt und einer Basis 13, die eine Verlängerung der Mundraumsituation widerspiegelt, die sich nicht aus den realen anatomischen Gegebenheiten beim Patienten ergibt. In der vestibulären Oberfläche des Modells 11 der Mundraumsituation an der Basis 13 des Modells 11 sind drei Vertiefungen 14 als Indexierungen 14 vorgesehen.

An der Schablone 1 sind im Bereich der Verbindungsfläche 16 zum Modell 11 der Mundraumsituation beziehungsweise am Basisteil 7 der Schablone 1 drei Indexierungen 15 als Erhebungen 15 vorgesehen, die zu den Vertiefungen 14 in dem Modell 11 der Mundraumsituation passen. Dadurch kann die Schablone 1 nicht nur mit der Indexierung 5 und der Indexierung 4 an der Prothesenbasis 3 ausgerichtet werden, sondern auch über die Indexierung 15 mit der Indexierung 14 an dem Modell 11 der Mundraumsituation gehalten und ausgerichtet werden.

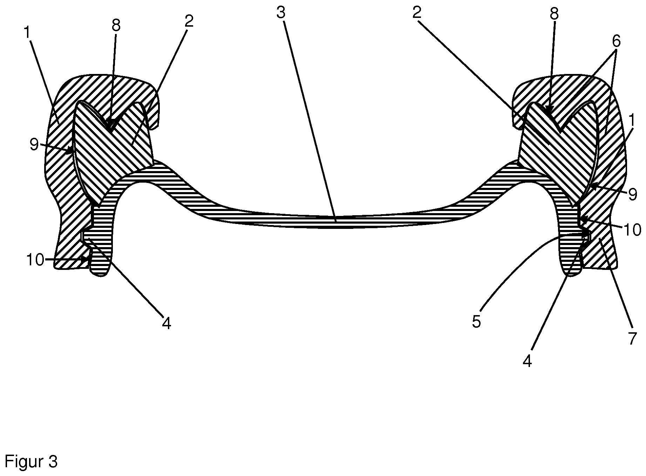

Figur 3 zeigt einen Querschnitt einer Dentalprothese mit angelegter Schablone 1 analog zu Figur 1, wobei der Schnitt parallel zu einer Frontalebene dargestellt ist. Die geschnittenen Prothesenzähne 2 sind hier als Molaren ausgebildet beziehungsweise als Backenzahnprothesen. Die Schablone 1 erstreckt sich um den gesamten Zahnbogen der Prothesenzähne 2 und um den Kieferbogen der Prothesenbasis 3 herum. Die zwei im Querschnitt zu erkennenden Indexierungen 4 an der Prothesenbasis 3 können durch rechteckige oder quaderförmige Erhebungen 4 gebildet sein, die in entsprechende Vertiefungen 5 an Basis 7 der Schablone 1 greifen. Die Indexierungen 4, 5 sind nicht umlaufend sondern lokal beziehungsweise um einen Punkt herum begrenzte geometrische Formen.

Die Erhebungen 4 müssen nach dem Befestigen der Prothesenzähne 2 mit Hilfe der Schablone 1 entfernt werden, indem sie beispielsweise abgefräst werden. Anschließend können überschüssige Reste wegpoliert werden.

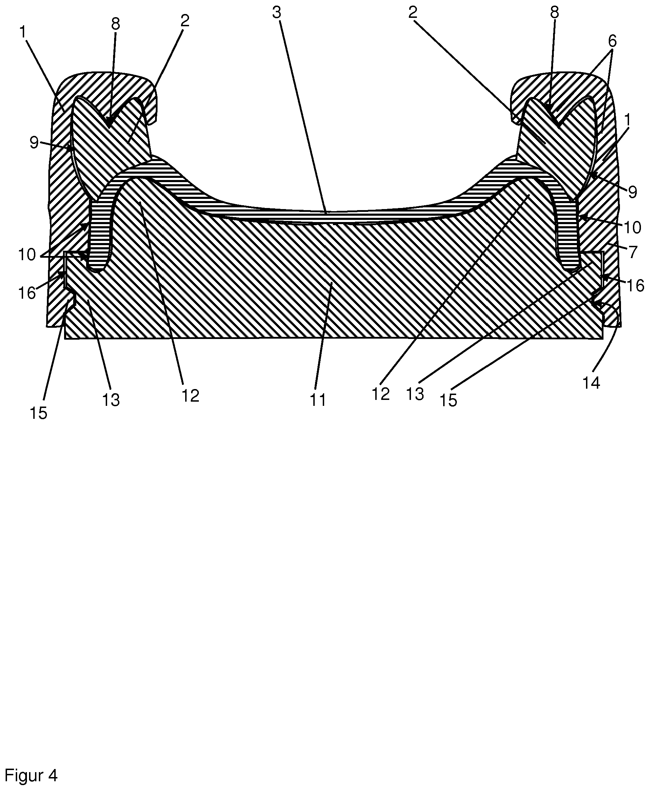

Das Entfernen der Erhebungen 4 kann entfallen, wenn ein Modell 11 des Mundraums des Patienten verwendet wird und an dem Modell 11 entsprechende Indexierungen 14 vorgesehen sind, die in negative Indexierungen 15 an der Schablone 1 greifen, wie dies in Figur 4 dargestellt ist oder wie dies analog zu Figur 2 ohne die Indexierungen 14, 15 an der Prothesenbasis 3 wäre. Figur 4 zeigt dazu einen Querschnitt parallel zur Frontalebene, bei dem das Modell 11 der Mundraumsituation unterhalb der Prothesenbasis 3 angeordnet ist. Bei dieser Ausführung nach Figur 4 weist die Prothesenbasis 3 im Gegensatz zu den Ausführungsbeispielen nach den Figuren 1 bis 3 keine Indexierung auf. Dementsprechend muss in dem Negativ der vestibulären Oberfläche 10 der Prothesenbasis 3 der Schablone 1 ebenfalls keine Indexierung vorgesehen sein. Die Ausrichtung und Orientierung der Schablone 1 erfolgt bei dieser Ausführungsform ausschließlich über Indexierungen 14, 15 an dem Modell 11 der Mundraumsituation und an der Schablone 1 in dem Bereich, der das Negativ zu der vestibulären Oberfläche 16 des Modells 11 der Mundraumsituation beziehungsweise von dessen Basis 13 bildet.

Bei allen Ausführungsformen gilt, dass die physischen Prothesenzähne 2 bevorzugt vereinzelt vorliegen und nicht miteinander verbunden sind. Das erfindungsgemäße Verfahren ist aber auch mit Zahnreihen von miteinander verbundenen Prothesenzähnen 2 durchführbar, die alle oder gruppenweise miteinander verbunden sind.

Die Prothesenzähne 2 bestehen aus einem harten weißen Kunststoff mit einer für Zähne oder zu den Zähnen des Patienten passenden Färbung und Transparenz. Jeder Prothesenzahn 2 weist eine basale Oberfläche, eine okklusale Oberfläche 8 und eine vestibuläre Oberfläche 9 auf. Die basale Oberfläche wird in den Zahnfächern zur Fixierung der Prothesenzähne 2 in der Prothesenbasis 3 fixiert. Die Zahnfächer passen zu den basalen Gegenstücken auf der basalen Seite der Prothesenzähne 2. Die basale Seite der Prothesenzähne 4 wird erfindungsgemäß durch basales Abtragen, insbesondere durch Abschleifen oder Abfräsen, von vorkonfektionierten Prothesenzähnen erzeugt.

Die Schablone 1 wird bei allen Ausführungsformen hergestellt, in dem die Form der Oberfläche 8, 9 aller koronalen Seiten und vestibulären Oberflächen der Prothesenzähne 2 und der vestibulären Oberfläche 10 der Prothesenbasis 3 in der aus dem virtuellen Dentalprothesen-Modell vorliegenden Orientierung und Anordnung zueinander als CAD-Modell für eine Oberfläche der Schablone 1 verwendet wird. Die anderen Oberflächen des CAD-Modells der Schablone 1 können als einfache Volumenform leicht automatisch ergänzt werden oder werden zusätzlich als Negative der vestibulären Oberfläche 16 eines Modells 11 der Mundraumsituation des Patienten ausgeformt. Dabei muss lediglich beachtet werden, dass die Schablone 1 nicht zu dünn ist, so dass die mechanische Haltbarkeit der Schablone 1 gewährleistet ist. Theoretisch kann die Schablone 1 auch aus mehreren Teilen bestehen, die Gruppen von Prothesenzähnen 2 oder einzelne Prothesenzähne 2 aufnehmen.

Das CAD-Modell der Schablone 1 wird verwendet, um die reale Schablone 1 mit einem CAM-Verfahren, beispielsweise durch ein RP-Verfahren, aus Kunststoff herzustellen. Die in den Figuren geschnitten dargestellten Oberflächen der Schablone 1 weisen Aufnahmeflächen auf, die der koronalen Form 8 und der vestibulären Form 9 der einzusetzenden Prothesenzähne 2 und der vestibulären Form 10 der Prothesenbasis 3 entsprechen.

Die Prothesenzähne 2 können vor dem Befestigen mit der Prothesenbasis 3 gereinigt werden und können dabei gegebenenfalls in der Schablone 1 verbleiben. Die Prothesenzähne 2 werden zuvor an der basalen Seite aufgeraut (beispielsweise mechanisch durch Sandstrahlen oder chemisch mit einem geeigneten Lösungsmittel) und/oder mit einer Flüssigkeit, die Methylmethacrylat (MMA) enthält, angequollen.

Ebenso werden die Zahnfächer der Prothesenbasis 3 zur Fixierung der Prothesenzähne 2 aufgeraut und mit einer MMA-haltigen Flüssigkeit angequollen. Als MMA-haltige Flüssigkeit kann beispielsweise Palabond® der Firma Heraeus Kulzer GmbH verwendet werden.

Nach der so erfolgten Vorkonfektionierung der zu verbindenden Oberflächen erfolgt eine endgültige Zementierung oder Verklebung der Prothesenzähne 2 in der Prothesenbasis 3, wobei die Prothesenzähne 2 zunächst noch in der Schablone 1 fixiert bleiben.

Zur Zementierung kann ein Zement im Überschuss verwendet werden, so dass mögliche Zwischenräume zwischen den Zahnfächern zur Fixierung der Prothesenzähne 2 in der Prothesenbasis 3 und den Prothesenzähnen 2 mit dem Zement gefüllt werden, ohne dass basale Hohlräume in den Zwischenräumen verbleiben und ohne dass im Gingvia-Zahnhalsbereich der erzeugten Dentalprothese Randspalte verbleiben. Zudem werden durch den Überschuss die Kontaktflächen optimal benetzt. Hervorquellende überschüssige Zementteigreste können vor dem Aushärten und/oder nach dem Aushärten entfernt werden. Zur endgültigen Befestigung der Prothesenzähne 2 in der Prothesenbasis 3 wird bevorzugt ein selbsthärtender Zement auf Pulver-Flüssigkeitsbasis verwendet.

Das erfindungsgemäße Verfahren kann mit manuell oder mittels Rapid-Prototyping-Verfahren hergestellten Prothesenbasen 3 beziehungsweise Modellen 11 des Mundraums durchgeführt werden. Ebenso kann das Verfahren alternativ auch auf gedruckte Prothesenzähne oder Prothesenzahnreihen angewandt werden.

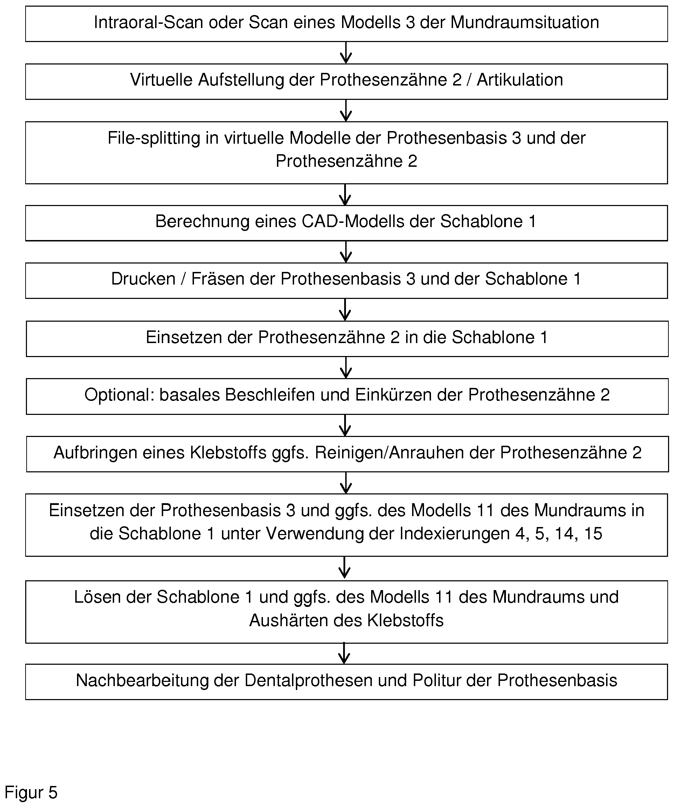

In Figur 5 wird ein beispielhaftes Ablaufdiagramm für ein erfindungsgemäßes Verfahren gezeigt.

Optional können die realen Prothesenzähne 2 durch Herstellen oder Kürzen mit einem CAM-Verfahren erzeugt und/oder bearbeitet werden.

Erfindungsgemäß werden die der vorliegenden Erfindung zugrundeliegenden Aufgaben also beispielsweise dadurch gelöst, dass, basierend auf einem Intraoral-Scan oder dem Scan eines Abdrucks (wie beispielsweise eines Gipsmodells) des zahnlosen oder teilweise zahnlosen Kiefers, zunächst eine virtuelle Dentalprothese digital konstruiert und anschließend mittels File-Splitting in einen Teil für die Prothesenbasis 3 und einen Teil für die Prothesenzähne 2 zerlegt wird.

Zur Positionierung der Prothesenzähne 2 wird nun eine Schablone 1 mittels RP-Verfahren (beispielsweise Fräsen oder Drucken) hergestellt, um die Prothesenzähne 2 exakt in dieser zuvor festgelegten räumlichen Anordnung zu fixieren und auf die Prothesenbasis 3 übertragen zu können.

Um die Prothesenzähne 2 in der Prothesenbasis 3 so platzieren und ausrichten zu können wie es in den CAD-Konstruktionsdaten vorgesehen ist, wird also erfindungsgemäß vorgeschlagen, im CAD automatisch oder durch den Anwender unterstützt eine Schablone 1 zu konstruieren, die die Ausrichtung der Prothesenzähne 2 zur Prothesenbasis 3 sicher stellt. Diese Schablone 1 wird ebenfalls als Datensatz zusammen mit den Daten der Prothesenbasis 3 und der Prothesenzähne 2 aus dem CAD herausgeschrieben und steht somit für ein additives oder subtraktives Fertigungsverfahren zur Verfügung.

Die Schablone 1 selbst wird dazu passgenau zur vestibulären/bukkalen, okklusal/incisalen Fläche der Prothesenzähne 2, passgenau zur vestibulären/bukkalen Fläche der Prothesenbasis 3 und/oder passgenau zum Rand des Modells 11 des Mundraums gestaltet.

Dabei können beispielsweise die folgenden zwei Varianten des Verfahrens realisiert werden:

### a) Benutzen der Prothesenbasis 3 zur Ausrichtung (ohne physisches Modell 11 der Mundraumsituation des Patienten)

Da die Oberfläche der Prothesenbasis 3 anatomisch gestaltet ist und damit abgerundet und keine geraden Flächen oder Ecken zur Abstützung und Ausrichtung aufweist, wird vorgeschlagen, an mehreren Stellen, mindestens an drei Stellen, geometrische Formen 4 als Indexierungen 4 an der Prothesenbasis 3 vorzusehen und diese beim additiven oder subtraktiven Verfahren mit herzustellen. Dazu muss im CAD die Möglichkeit zur Positionierung von Fixierungshilfen 4 (CAD-Bibliothek mit geeigneten Geometrien) gegeben sein, die dann an geeigneten Fixpunkten an der Prothesenbasis 3 platziert werden.

Die Geometrie der Schablone 1 ist nun so beschaffen, dass der obere Anteil 6 die Formen 8, 9 und die Anordnung der Prothesenzähne 2 wiedergibt und der untere Anteil 7 ermöglicht die Ausrichtung zur Prothesenbasis 3. Dazu muss sichergestellt sein, dass die Schablone 1 an der Prothesenbasis 3 genau ausgerichtet werden kann, so dass die Position in alle Raumrichtungen festgelegt ist. Dazu sind minimal drei Fixpunkte notwendig.

Die Schablone 1 stützt und fixiert sich dann über diese geometrischen Anordnungen 4. Nach dem Ausrichten und Fixieren der Prothesenzähne 2 in der Prothesenbasis 3 werden diese geometrischen Formen 4 an der Prothesenbasis 3 vom Zahntechniker mit einer Handfräse beseitigt und beim Polieren, dass ohnehin zum Finalisieren der Dentalprothese durchgeführt wird, egalisiert.

### b) Benutzen des Modells 11 der Mundraumsituation des Patienten zur Ausrichtung

Zur besseren Fixierung der Schablone 1 auf dem Modell 11 muss dieses vor dem Scanprozess mit Fixierungsmöglichkeiten (zum Beispiel mit Führungsrillen, Kerben oder Mulden) versehen sein.

Die Geometrie der Schablone 1 ist nun so beschaffen, dass der obere Anteil 6 die Formen 8, 9 und die Anordnung der Prothesenzähne 2 wiedergibt und der untere Anteil 7 ermöglicht die Ausrichtung zur Prothesenbasis 3, indem sich entsprechende Geometrien 15 der Schablone 1 in die Fixierungsmöglichkeiten 14 des Modells 11 setzen. Dazu muss sichergestellt sein, dass die Schablone 1 am Modell 11 genau ausgerichtet werden kann, so dass die Position in alle Raumrichtung festgelegt ist. Dazu sind minimal drei Fixpunkte notwendig.

Die Übertragungsschablone 1 stützt und fixiert sich dann über die Fixierungsmöglichkeiten 15 im Modell 11 und ermöglicht, die Prothesenzähne 2 ausgerichtet in die Prothesenbasis 3 zu setzen und zu fixieren. Sobald die Prothesenzähne 2 sicher befestigt sind, kann die Schablone 1 entfernt werden. Eine manuelle Nacharbeitung an der Prothesenbasis 3 wie unter a) ist nicht notwendig, wenn keine Indexierungen zusätzlich an der Prothesenbasis 3 vorgesehen sind.

Denkbar wäre auch, dass eine Fixierung gleichermaßen im Modell 11 und In der Prothesenbasis 3 eingebracht wird. Dies ist aber für die Funktion nicht zwingend notwendig und bedingt, dass die geometrischen Formen 4 aus der Prothesenbasis 3 wieder entfernt werden müssten, wie unter a) beschrieben.

Die in der voranstehenden Beschreibung, sowie den Ansprüchen, Figuren, dem Ablaufdiagramm und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Schablone
- 2: Prothesenzahn
- 3: Prothesenbasis
- 4: Indexierung / Erhebung
- 5: Indexierung / Vertiefung
- 6: Dentalteil der Schablone
- 7: Basisteil der Schablone
- 8: Okklusale Oberfläche des Prothesenzahns
- 9: Vestibuläre Oberfläche des Prothesenzahns
- 10: Vestibuläre Oberfläche der Prothesenbasis
- 11: Modell der Mundraumsituation
- 12: Modell des Zahnbogens
- 13: Basis des Modells des Mundraums
- 14: Indexierung / Vertiefung
- 15: Indexierung / Erhebung
- 16: Vestibuläre Oberfläche des Modells der Mundraumsituation

## Patentansprüche

1. Verfahren zur Herstellung einer Dentalprothese, wobei die Dentalprothese eine Prothesenbasis (3) und mehrere Prothesenzähne (2) aufweist, wobei das Verfahren unter Anwendung eines virtuellen dreidimensionalen Dentalprothesen-Modells der zu erzeugenden physischen Dentalprothese erfolgt und wobei das virtuelle dreidimensionale Dentalprothesen-Modell virtuelle Prothesenzähne (2) und eine virtuelle Prothesenbasis (3) aufweist, **gekennzeichnet durch** die folgenden chronologischen Schritte:
A) aus der äußeren Form der vestibulären Oberflächen (9) und/oder okklusalen Oberflächen (8) der virtuellen Prothesenzähne (2) und aus der äußeren Form der vestibulären Oberfläche (10) der virtuellen Prothesenbasis (3) des virtuellen dreidimensionalen Dentalprothesen-Modells wird ein virtuelles Modell einer Schablone (1) berechnet, so dass ein Bereich der virtuellen Oberfläche der virtuellen Schablone (1) durch ein Negativ der vestibulären Oberflächen (9) und/oder okklusalen Oberflächen (8) der virtuellen Prothesenzähne (2) und der virtuellen Prothesenbasis (3) gebildet wird, wobei die Lage und die Orientierung der virtuellen Prothesenzähne (2) relativ zueinander und relativ zu der virtuellen Prothesenbasis (3) in dem Negativ erhalten bleibt;
B) Herstellen einer physischen Schablone (1) mit einem CAM-Verfahren anhand der Daten des virtuellen Modells der Schablone (1);
C) Anlegen und Befestigen von physischen Prothesenzähnen (2) an der Schablone (1), wobei die vestibulären Oberflächen (9) und/oder okklusalen Oberflächen (8) der Prothesenzähne (2) an die durch das dazu passende Negativ geformte Oberfläche der Schablone (1) angelegt werden; und
D) Befestigen der physischen Prothesenzähne (2) an einer physischen Prothesenbasis (3), wobei die Prothesenbasis (3) in die mit den Prothesenzähnen (2) bestückte Schablone (1) eingesetzt wird, so dass die vestibuläre Oberfläche (10) der Prothesenbasis (3) an die durch das Negativ geformte passende Oberfläche der Schablone (1) angelegt wird.

2. Verfahren nach Anspruch 1, **dadurch gekennzeichnet, dass** das virtuelle dreidimensionale Dentalprothesen-Modell rechnerisch mittels File-Splitting in ein dreidimensionales Modell der virtuellen Prothesenzähne (2) und ein virtuelles dreidimensionales Modell der Prothesenbasis (3) geteilt wird.

3. Verfahren nach einem der vorangehenden Ansprüche, **dadurch gekennzeichnet, dass**
das virtuelle Modell der Schablone (1) zusätzlich aus der äußeren Form der vestibulären Oberfläche (16) eines Modells (11) der Mundraumsituation des Patienten berechnet wird, so dass ein Bereich der virtuellen Oberfläche der virtuellen Schablone (1) durch ein Negativ zumindest eines Bereichs der vestibulären Oberfläche (16) des Modells (11) der Mundraumsituation gebildet wird, wobei die Lage und die Orientierung der virtuellen Prothesenzähne (2) und der virtuellen Prothesenbasis (3) relativ zu dem Modell (11) der Mundraumsituation, bei auf dem Modell (11) der Mundraumsituation aufliegender virtueller Prothesenbasis (3), in dem Negativ erhalten bleibt.

4. Verfahren nach Anspruch 3, **dadurch gekennzeichnet, dass**
in Schritt D) das Befestigen der physischen Prothesenzähne (2) an der physischen Prothesenbasis (3) derart erfolgt, dass die Prothesenbasis (3) und das physische Modell (11) der Mundraumsituation des Patienten in die mit den Prothesenzähnen (2) bestückte Schablone (1) eingesetzt werden, so dass die vestibuläre Oberfläche (10) der Prothesenbasis (3) und die vestibuläre Oberfläche (16) des physischen Modells (11) des Mundraums des Patienten an die durch das Negativ geformte Oberfläche der Schablone (1) angelegt wird.

5. Verfahren nach Anspruch 3 oder 4, **dadurch gekennzeichnet, dass**
zu dem Negativ der vestibulären Oberfläche (16) des Modells (11) der Mundraumsituation rechnerisch zumindest eine Indexierung (15), bevorzugt zumindest drei Indexierungen (15), zu dem virtuellen Modell der Schablone (1) ergänzt wird und an der vestibulären Oberfläche (16) des Modells (11) der Mundraumsituation rechnerisch ein passendes Negativ (14) der Oberfläche der zumindest einen Indexierung (15) zu dem Modell (11) der Mundraumsituation ergänzt wird, bevorzugt passende Negative (14) der zumindest drei Indexierungen (15) zu dem Modell (11) der Mundraumsituation ergänzt werden.

6. Verfahren nach einem der vorangehenden Ansprüche, **dadurch gekennzeichnet, dass**
an dem Negativ der vestibulären Oberfläche (10) der virtuellen Prothesenbasis (3) rechnerisch zumindest eine Indexierung (5), bevorzugt zumindest drei Indexierungen (5), zu dem virtuellen Modell der Schablone (1) ergänzt wird und an der vestibulären Oberfläche (10) der virtuellen Prothesenbasis (3) rechnerisch ein dazu passendes Negativ (4) der Oberfläche der zumindest einen Indexierung (5) ergänzt wird, bevorzugt passende Negative (4) der zumindest drei Indexierungen (5) ergänzt werden.

7. Verfahren nach einem der vorangehenden Ansprüche, **dadurch gekennzeichnet, dass**
nach Schritt D) die Schablone (1) von der fertigen Dentalprothese bestehend aus den in der Prothesenbasis (3) befestigten Prothesenzähnen (2) entfernt wird.

8. Verfahren nach einem der vorangehenden Ansprüche, **dadurch gekennzeichnet, dass**
das virtuelle dreidimensionale Dentalprothesen-Modell auf der Grundlage eines Intraoral-Scans zur Formgebung der virtuellen Prothesenbasis (3) und durch eine virtuelle Aufstellung von virtuellen Modellen vorkonfektionierter Prothesenzähne (2) in der virtuellen Prothesenbasis (3) erzeugt wird, wobei bevorzugt die Form, die Lage und/oder die Orientierung der Prothesenzähne (2) durch eine Simulation der Lage der Dentalprothese im Mundraum des Patienten ausgewählt wird und/oder durch eine Simulation der Lage und Orientierung der Prothesenzähne (2) zueinander und/oder zur Prothesenbasis (3) ausgewählt wird, wobei besonders bevorzugt die Okklusionsebene und/oder die Kaubewegungen des Mundraums simuliert werden.

9. Verfahren nach einem der vorangehenden Ansprüche, **dadurch gekennzeichnet, dass**
die physische Prothesenbasis (3) und die physische Schablone (1) mit CAM-Verfahren, insbesondere mit Rapid-Prototyping-Verfahren, basierend auf den virtuellen Modellen hergestellt und/oder bearbeitet werden.

10. Verfahren nach einem der vorangehenden Ansprüche, **dadurch gekennzeichnet, dass**
die in die Schablone (1) eingesetzten physischen Prothesenzähne (2) basal bearbeitet werden, bevor sie an der physischen Prothesenbasis (3) befestigt werden, bevorzugt die eingesetzten vorkonfektionierten Prothesenzähne (2) basierend auf dem virtuellen Modell der Prothesenzähne (2) mit einem CAM-Verfahren basal abgetragen werden, besonders bevorzugt einer computergesteuerten Fräse basal abgetragen werden, bevor sie an der physischen Prothesenbasis (3) befestigt werden.

11. Verfahren nach Anspruch 10, **dadurch gekennzeichnet, dass**
die Prothesenzähne (2) anhand des virtuellen Modells der Prothesenzähne (2) mit einem CAM-Verfahren basal abgetragen werden, insbesondere abgefräst werden, so dass die basale Form der Prothesenzähne (2) derart an Zahnfächer für die Prothesenzähne (2) in der Prothesenbasis (3) angepasst wird, dass die äußere Form der Prothesenbasis (3) mit den eingesetzten Prothesenzähnen (2) der äußeren Form des virtuellen Dentalprothesen-Modells entspricht.

12. Verfahren nach einem der vorangehenden Ansprüche, **dadurch gekennzeichnet, dass**
die Prothesenzähne (2) mit einem CAM-Verfahren hergestellt werden, bevorzugt durch Fräsen oder ein aufbauendes CAM-Verfahren hergestellt werden.

13. Verfahren nach einem der vorangehenden Ansprüche, **dadurch gekennzeichnet, dass**
zur Berechnung des virtuellen Dentalprothesen-Modells bereits vorhandene Daten zur äußeren Form von bekannten vorkonfektionierten Prothesenzähnen (2) verwendet werden.

14. Dentalprothese mit einer angelegten Schablone (1) hergestellt mit einem Verfahren nach einem der Ansprüche 1 bis 13, wobei vestibuläre Oberflächen (9) und/oder okklusale Oberflächen (8) von Prothesenzähnen (2) der Dentalprothese an eine, durch das dazu passende Negativ geformte Oberfläche der Schablone (1) angelegt sind und eine vestibuläre Oberfläche (10) einer Prothesenbasis (3) der Dentalprothese an eine durch ein Negativ geformte passende Oberfläche der Schablone (1) angelegt sind.

15. Vorrichtung oder Kombination von Vorrichtungen zum Durchführen eines Verfahrens nach einem der Ansprüche 1 bis 13, umfassend eine CAM-Vorrichtung und einen Computer zur Berechnung der virtuellen Modelle und zur Steuerung der CAM-Vorrichtung nach einem der Ansprüche 1 bis 13.

16. Schablone (1) hergestellt mit einem CAD/CAM-Verfahren zur Umsetzung eines Verfahrens nach einem der Ansprüche 1 bis 13, wobei ein Bereich der Oberfläche der Schablone (1) durch ein Negativ vestibulärer Oberflächen (9) und/oder okklusaler Oberflächen (8) von Prothesenzähnen (2) gebildet ist und ein Bereich der Oberfläche der Schablone (1) durch ein Negativ einer vestibulären Oberfläche (10) einer Prothesenbasis (3) gebildet ist.

## Claims

1. Method for producing a dental prosthesis, wherein the dental prosthesis comprises a prosthesis base (3) and a plurality of prosthesis teeth (2), wherein the method is carried out making use of a virtual three-dimensional dental prosthesis model of the physical dental prosthesis which is to be produced and wherein the virtual three-dimensional dental prosthesis model comprises virtual prosthesis teeth (2) and a virtual prosthesis base (3), **characterized by** the following chronological steps:
A) From the external shape of the vestibular surfaces (9) and/or occlusal surfaces (8) of the virtual prosthesis teeth (2), and from the external form of the vestibular surface (10) of the virtual prosthesis base (3) of the virtual three-dimensional dental prosthesis model, a virtual model of a template (1) is calculated, such that a region of the virtual surface of the virtual template (1) is formed by a negative of the vestibular surfaces (9) and/or occlusal surfaces (8) of the virtual prosthesis teeth (2) and of the virtual prosthesis base (3), wherein the location and the orientation of the virtual prosthesis teeth (2) relative to one another and relative to the virtual prosthesis base (3) remain retained in the negative;
B) Production of a physical template (1) with a CAM process on the basis of the data of the virtual model of the template (1);
C) Placement and securing of physical prosthesis teeth (2) in the template (1), wherein the vestibular surfaces (9) and/or occlusal surfaces (8) of the prosthesis teeth (2) are placed in the surface of the template (1) which is formed by the matching negative; and
D) Securing of the physical prosthesis teeth (2) to a physical prosthesis base (3), wherein the prosthesis base (3) is inserted into the template (1) fitted with the prosthesis teeth (2), such that the vestibular surface (10) of the prosthesis base (3) is located on the matching surface of the template (1) formed by the negative.

2. Method according to claim 1, **characterized in that**
the virtual three-dimensional dental prosthesis model is divided by computer calculation by means of file-splitting into a three-dimensional model of the virtual prosthesis teeth (2) and a virtual three-dimensional model of the prosthesis base (3).

3. Method according to any one of the preceding claims, **characterized in that**
the virtual model of the template (1) is additionally calculated from the external form of the vestibular surface (16) of a model (11) of the oral cavity situation of the patient, such that a region of the virtual surface of the virtual template (1) is formed by a negative of at least one region of the vestibular surface (16) of the model (11) of the oral cavity situation, wherein the location and the orientation of the virtual prosthesis teeth (2) and of the virtual prosthesis base (3), relative to the model (11) of the oral cavity situation, with the virtual prosthesis base (3) lying on the model (11) of the oral cavity situation, remain retained in the negative.

4. Method according to claim 3, **characterized in that**
in step D), the securing of the physical prosthesis teeth (2) to the physical prosthesis base (3) is effected in such a way that the prosthesis base (3) and the physical model (11) of the oral cavity situation of the patient are inserted into the template (1) fitted with the prosthesis teeth (2), such that the vestibular surface (10) of the prosthesis base (3) and the vestibular surface (16) of the physical model (11) of the oral cavity of the patient are in contact with the surface of the template (1) formed by the negative.

5. Method according to claim 3 or 4, **characterized in that**
added to the negative of the vestibular surface (16) of the model (11) of the oral cavity situation, by computer calculation, is at least one indexing (15), preferably at least three indexings (15), to the virtual model of the template (1), and to the vestibular surface (16) of the model (11) of the oral cavity situation, by computer calculation, is added a matching negative (14) of the surface of the at least one indexing (15) to the model (11) of the oral cavity situation, and preferably matching negatives (14) of the at least three indexings (15) are added to the model (11) of the oral cavity situation.

6. Method according to any one of the preceding claims, **characterized in that**
added to the negative of the vestibular surface (10) of the virtual prosthesis base (3) by computer calculation is at least one indexing (5), preferably at least three indexings (5), to the virtual model of the template (1), and to the vestibular surface (10) of the virtual prosthesis base (3), by computer calculation, a matching negative (4) of the surface of the at least one indexing (5) is added, preferably matching negatives (4) of the at least three indexings (5).

7. Method according to any one of the preceding claims, **characterized in that** after step D), the template (1) of the finished dental prosthesis, consisting of the prosthesis teeth (2) secured in the prosthesis base (3), is removed.

8. Method according to any one of the preceding claims, **characterized in that**
the virtual three-dimensional dental prosthesis model is produced on the basis of an intraoral scan for determining the form of the virtual prosthesis base (3) and by a virtual arrangement of virtual models of prepared artificial prosthesis teeth (2) in the virtual prosthesis base (3), wherein preferably the form, the location, and/or the orientation of the prosthesis teeth (2) are selected by a simulation of the location of the dental prosthesis in the oral cavity of the patient, and/or by a simulation of the location and orientation of the prosthesis teeth (2) in relation to one another and/or to the prosthesis base (3), wherein for particular preference the occlusion plane and/or the mastication movements of the oral cavity are simulated.

9. Method according to any one of the preceding claims, **characterized in that**
the physical prosthesis base (3) and the physical template (1) are produced and/or processed by CAM processes, in particular Rapid Prototyping processes, based on the virtual models.

10. Method according to any one of the preceding claims, **characterized in that**
the physical prosthesis teeth (2) inserted into the template (1) are basally processed before they are secured to the physical prosthesis base (3), preferably the inserted prepared artificial prosthesis teeth (2), based on the virtual model of the prosthesis teeth (2), are basally abraded by a CAM process, for particular preference by a computer-controlled milling process, before they are secured to the physical prosthesis base (3).

11. Method according to claim 10, **characterized in that**
the prosthesis teeth (2) are basally abraded on the basis of the virtual model of the prosthesis teeth (2) by a CAM process, in particular by milling, such that the basal form of the prosthesis teeth (2) is adjusted to tooth sockets for the prosthesis teeth (2) in the prosthesis base (3), and that the outer form of the prosthesis base (3), with the prosthesis teeth (2) inserted, corresponds to the outer form of the virtual dental prosthesis model.

12. Method according to any one of the preceding claims, **characterized in that**
the prosthesis teeth (2) are produced with a CAM process, preferably by milling or a building up CAM process.

13. Method according to any one of the preceding claims, **characterized in that** for the calculation of the virtual dental prosthesis model, use is made of already existing data regarding the external form of known prepared artificial prosthesis teeth (2).

14. Dental prosthesis with placed template (1) produced with a method according to any one of claims 1 to 13, wherein vestibular surfaces (9) and/or occlusal surfaces (8) of the prosthesis teeth (2) are placed in a surface of the template (1) which is formed by the matching negative and a vestibular surface (10) of a prosthesis base (3) is located on the matching surface of the template (1) formed by a negative.

15. Device or combination of devices for carrying out a method according to any one of claims 1 to 13, comprising a CAM device and a computer for the calculation of the virtual models and to control the CAM device according to one of the claims 1 to 13.

16. Template (1) produced with a CAD/CAM process for implementing a method according to any one of claims 1 to 13, wherein a region of the surface of the template (1) is formed by a negative of the vestibular surfaces (9) and/or occlusal surfaces (8) of the virtual prosthesis teeth (2) and of the virtual prosthesis base (3) and a region of the surface of the template (1) is formed by a negative of an vestibular surface (10) of a prosthesis base (3).

## Revendications

1. Procédé de fabrication d'une prothèse dentaire, où la prothèse dentaire présente une base de prothèse (3) et plusieurs dents prothétiques (2), où le procédé a lieu moyennant l'emploi d'un modèle de prothèse dentaire tridimensionnel virtuel de la prothèse dentaire physique à réaliser et où le modèle de prothèse dentaire tridimensionnel virtuel présente des dents prothétiques (2) virtuelles et une base de prothèse (3) virtuelle, **caractérisé par** les étapes chronologiques suivantes :
A) à partir de la forme extérieure des surfaces vestibulaires (9) et/ou des surfaces occlusales (8) des dents prothétiques (2) virtuelles et à partir de la forme extérieure de la surface vestibulaire (10) de la base de prothèse (3) virtuelle du modèle de prothèse dentaire tridimensionnel virtuel, on calcule un modèle virtuel d'un gabarit (1), de sorte qu'une zone de la surface virtuelle du gabarit (1) virtuel est formée par un négatif des surfaces vestibulaires (9) et/ou des surfaces occlusales (8) des dents prothétiques (2) virtuelles et de la base de prothèse (3) virtuelle, où la position et l'orientation des dents prothétiques (2) virtuelles les unes par rapport aux autres et par rapport à la base de prothèse (3) virtuelle restent conservées dans le négatif ;
B) fabrication d'un gabarit (1) physique avec un procédé FAO à l'aide des données du modèle virtuel du gabarit (1) ;
C) mise en place et fixation de dents prothétiques (2) physiques sur le gabarit (1), où les surfaces vestibulaires (9) et/ou surfaces occlusales (8) des dents prothétiques (2) sont mises en place sur la surface du gabarit (1) formé par le négatif leur correspondant ; et
D) fixation des dents prothétiques ((2) physiques sur une base de prothèse (3) physique, où la base de prothèse (3) est implantée dans le gabarit (1) équipé des dents prothétiques (2), de sorte que la surface vestibulaire (10) de la base de prothèse (3) peut être appliquée sur la surface du gabarit (1) adaptée formée par le négatif.

2. Procédé selon la revendication 1, **caractérisé en ce que**
le modèle de prothèse dentaire tridimensionnel virtuel est divisé par un calcul au moyen d'une division de fichiers en un modèle tridimensionnel des dents prothétiques (2) virtuelles et un modèle tridimensionnel virtuel de la base de prothèse (3).

3. Procédé selon l'une des revendications précédentes, **caractérisé en ce que**
le modèle virtuel du gabarit (1) est calculé en outre à partir de la forme extérieure de la surface vestibulaire (16) d'un modèle (11) de la situation de l'espace buccal du patient, de sorte qu'une zone de la surface virtuelle du gabarit (1) virtuel est formée par un négatif d'au moins une zone de la surface vestibulaire (16) du modèle (11) de la situation de l'espace buccal, où la position et l'orientation des dents prothétiques (2) virtuelles et de la base de prothèse (3) virtuelle par rapport au modèle (11) de la situation de l'espace buccal restent conservées sur le modèle (11) de la base de prothèse (3) virtuelle reposant sur la situation de l'espace buccal.

4. Procédé selon la revendication 3, **caractérisé en ce que**,
dans l'étape D), la fixation des dents prothétiques (2) physiques sur la base de prothèse (3) physique a lieu de telle manière que la base de prothèse (3) et le modèle physique (11) de la situation de l'espace buccal du patient sont implantés dans le gabarit (1) équipé des dents prothétiques (2), de sorte que la surface vestibulaire (16) de la base de prothèse (3) et la surface vestibulaire (16) du modèle physique (11) de l'espace buccal du patient sont appliquées sur la surface du gabarit (1) formée par le négatif.

5. Procédé selon la revendication 3 ou 4, **caractérisé en ce**
**qu'**en plus du négatif de la surface vestibulaire (16) du modèle (11) de la situation de l'espace buccal, au moins une indexation (15), de préférence, au moins trois indexations (15) complètent le modèle virtuel du gabarit (1) et qu'au niveau de la surface vestibulaire (16) du modèle (11) de la situation de l'espace buccal on complète par calcul par un négatif (4) adapté de la surface de l'au moins une indexation (15) pour le modèle (11) de la situation de l'espace buccal, de préférence, on complète par des négatifs (4) adaptés des au moins trois indexations (15) pour le modèle (11) de la situation de l'espace buccal.

6. Procédé selon l'une des revendications précédentes, **caractérisé en ce**
**qu'**au niveau du négatif de la surface vestibulaire (10) de la base de prothèse (3) virtuelle, au moins une indexation (5), de préférence, au moins trois indexations (5) complètent par calcul le modèle virtuel du gabarit (1) et qu'au niveau de la surface vestibulaire (10) de la base de prothèse (3) virtuelle, on complète par calcul d'un négatif (4) adapté de la surface de l'au moins une indexation (5), de préférence, des négatifs (4) adaptés des au moins trois indexations (5).

7. Procédé selon l'une des revendications précédentes, **caractérisé en ce**
**qu'**après l'étape D), le gabarit (1) est retiré de la prothèse dentaire terminée constituée des dents prothétiques (2) fixées dans la base de prothèse (3).

8. Procédé selon l'une des revendications précédentes, **caractérisé en ce que**
le modèle de prothèse dentaire tridimensionnel virtuel est complété sur la base d'un balayage intra-oral pour la mise en forme de la base de prothèse (3) virtuelle et par une élaboration de modèles virtuels de dents prothétiques (2) pré-confectionnées dans la base de prothèse (3) virtuelle, où, de référence, la forme, la position et/ou l'orientation des dents prothétiques (2) sont choisies par une simulation de la position de la prothèse dentaire dans l'espace buccal du patient et/ou par une simulation de la position et de l'orientation des dents prothétiques (2) les unes par rapport aux autres et/ou par rapport à la base de prothèse (3), où, de manière particulièrement préférée, le plan d'occlusion et/ou les mouvements de mastication de l'espace buccal sont simulés.

9. Procédé selon l'une des revendications précédentes, **caractérisé en ce que**
la base de prothèse (3) physique et le gabarit (1) physique sont élaborés et/ou traités avec un procédé FAO, en particulier, un procédé de prototypage rapide, basé sur les modèles virtuels.

10. Procédé selon l'une des revendications précédentes, **caractérisé en ce que**
les dents prothétiques (2) physiques implantées dans le gabarit (1) sont façonnées à la base avant qu'elles ne soient fixées sur la base de prothèse (3) physique, de préférence, les dents prothétiques (2) pré-confectionnées implantées en se basant sur le modèle virtuel des dents prothétiques (2) sont enlevées à la base avec un procédé FAO, de manière particulièrement préférée, sont enlevées à la base avec une fraise commandée informatiquement avant qu'elles ne soient fixées sur la base de prothèse (3) physique.

11. Procédé selon l'une des revendications précédentes, **caractérisé en ce que**
les dents prothétiques (2), à l'aide du modèle virtuel des dents prothétiques (2), sont enlevées à la base avec un procédé FAO, en particulier, enlevées par fraisage, de sorte que la forme basale des dents prothétiques (2) est adaptée aux espaces dentaires pour les dents prothétiques (2) dans la base de prothèse (3) de telle manière que la forme extérieure de la base de prothèse (3) avec les dents prothétiques (2) implantées correspond à la forme extérieure du modèle de prothèses dentaires virtuel.

12. Procédé selon l'une des revendications précédentes, **caractérisé en ce que** les dents prothétiques (2) sont fabriquées avec un procédé FAO, sont fabriquées de préférence, par fraisage ou par un procédé FAO constructif.

13. Procédé selon l'une des revendications précédentes, **caractérisé en ce que**
pour le calcul du modèle de prothèse dentaire virtuel, des données présentes sont employées pour la forme extérieure de dents prothétiques (2) pré-confectionnées.

14. Prothèse dentaire avec un gabarit (1) appliqué fabriquée avec un procédé selon l'une des revendications 1 à 13, où les surfaces vestibulaires (9) et/ou les surfaces occlusales (8) de dents prothétiques (2) de la prothèse dentaire sont appliquées sur une surface du gabarit (1) formées par le négatif qui leur est adapté et une surface vestibulaire (10) d'une base de prothèse (3) de la prothèse dentaire est appliquée sur la surface du gabarit (1) adaptée formée par un négatif.

15. Dispositif ou combinaison de dispositifs pour l'exécution d'un procédé selon l'une des revendications 1 à 13, comprenant un dispositif FAO et un ordinateur pour le calcul de modèles virtuels et pour la commande du dispositif FAO selon l'une des revendications 1 à 13.

16. Gabarit (1) fabriqué avec un procédé CAO/FAO pour la mise en application d'un procédé selon l'une des revendications 1 à 13, dans lequel une zone de la surface du gabarit (1) est formée par un négatif de surfaces vestibulaires (9) et/ou de surfaces occlusales (8) de dents prothétiques (2) et une zone de la surface du gabarit (1) est formée par un négatif d'une surface vestibulaire (10) d'une base de prothèse (3).
